# FASCICULE DE BREVET EUROPEEN

(11) **EP 2 686 177 B1**
(45) Date de publication et mention de la délivrance du brevet: **08.11.2017**
(21) Numéro de dépôt: 12714767.6
(22) Date de dépôt: 13.03.2012
(51) Int. Cl.: B60J 1/00, B60J 1/14

(54) **BAIE COMPORTANT UN VITRAGE OUVRABLE PAR ROTATION ET UN DISPOSITIF DE FIXATION DU VITRAGE**
RAHMEN MIT EINEM DREHBAR ÖFFNENDEN GLASSFLÜGEL UND BEFESTIGUNGSVORRICHTUNG FÜR DEN GLASSFLÜGEL
FRAME COMPRISING A ROTATIONALLY OPENABLE GLASS PANEL AND FASTENING DEVICE FOR THE GLASS PANEL

(30) Priorité: 14.03.2011 FR 1152030
(43) Date de publication de la demande: 22.01.2014
(73) Titulaire: Saint-Gobain Glass France, 92400 Courbevoie (FR)
(72) Inventeur: GRANDGIRARD, Bastien, F-60490 Marqueglise (FR); COUTELLIER, Nicolas, 60200 Compiegne (FR); HUCHET, Gérard, F-60350 Autreches (FR)
(74) Mandataire: Saint-Gobain Recherche
(86) Numéro de dépôt international: PCT/FR2012/050521
(87) Numéro de publication internationale: WO 2012/123674

(56) Documents cités:
- EP-A1- 0 289 156
- CA-A1- 2 120 893
- DE-A1- 3 925 804
- DE-A1- 10 360 436
- US-A1- 2003 024 183

## Description

La présente invention concerne un dispositif de fixation d'un vitrage ouvrable par rotation, notamment d'un vitrage utilisé sur un véhicule. La présente invention concerne également les vitrages mettant en oeuvre un tel dispositif de fixation.

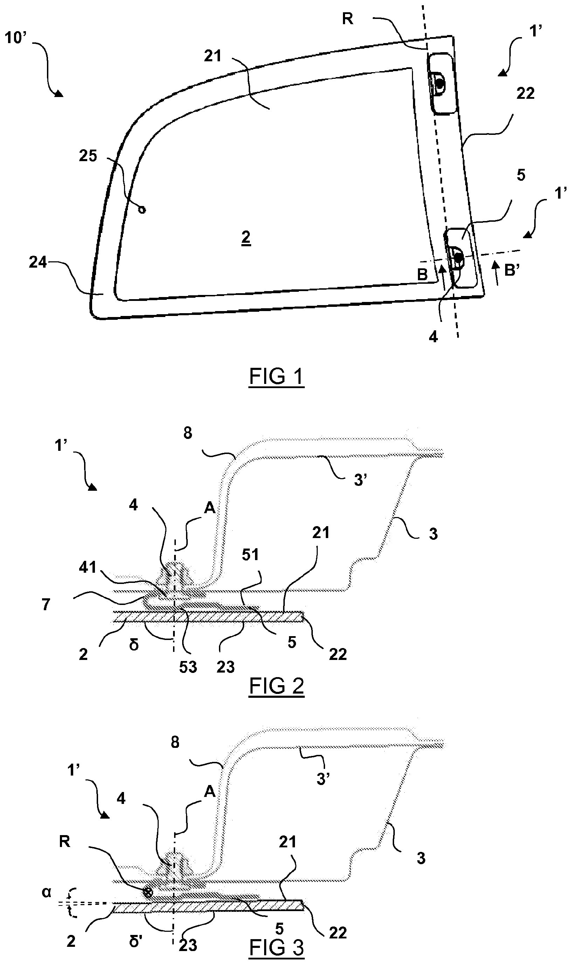

L'art antérieur connaît un dispositif de fixation 1' illustré aux figures 1 à 3, pour la fixation d'un élément vitré 2 dans une baie afin que ledit élément vitré 2 puisse être mobile en rotation par rapport à cette baie selon un axe de rotation R d'un angle d'ouverture a faible, c'est-à-dire entre > 0° et ≤ 10 °. Ce dispositif de fixation 1' connu comporte :
- d'une part au moins un élément saillant 4 présentant un axe A pour la fixation du dispositif de fixation 1' à un montant 3 de ladite baie et
- d'autre part une semelle 5 présentant une face intérieure 51 et une face extérieure 53 qui est collée contre une surface intérieure 21 dudit élément vitré 2. La colle utilisée est une colle polyuréthane.

Dans ce dispositif, l'élément saillant 4 est un moyen de fixation rigide pour la fixation rigide de l'élément saillant au montant 3 de la baie, de telle sorte que l'orientation de l'axe A de l'élément saillant par rapport au montant 3 soit inchangée lors du mouvement d'ouverture ou de fermeture dudit élément vitré 2.

La fonction « ouvrante » est assurée par le dispositif grâce à une forme de la semelle 5 en U qui s'écrase de quelques degrés lorsque les ailes du U se rapprochent, permettant l'ouverture du vitrage de plusieurs dizaines de millimètres à l'extrémité opposé au dispositif de fixation 1'.

Le dispositif de fixation 1' est réalisé en alliage métallique (acier non inoxydable) et il est obligatoire de prévoir un traitement de cataphorèse sur l'acier non inoxydable à la fois pour le protéger de la corrosion et à la fois pour permettre l'adhésion sur l'élément vitré. Ce traitement est aussi nécessaire lorsque le dispositif fixation est réalisé en acier inoxydable pour permettre l'adhésion sur l'élément vitré. Ce traitement nécessite une opération supplémentaire dans le processus de fabrication, et peut être source de défauts qui peuvent provoquer une mauvaise adhérence sur la surface intérieure 21 et peuvent même aller jusqu'à provoquer la chute du vitrage.

Par ailleurs, la forme en U nécessite une opération de pliage de la tôle qui vient ajouter, en plus des complications processus, une plus grande source d'incertitude dans le positionnement du dispositif de fixation dans le référentiel de la pièce finie.

L'art antérieur connaît par ailleurs par la demande internationale de brevet N° WO 97/005355 un dispositif de fixation pour la fixation d'un élément vitré dans une baie afin que ledit élément vitré puisse être mobile en rotation par rapport à cette baie selon un axe de rotation R d'un angle d'ouverture α faible, ledit dispositif comportant :
- d'une part au moins un élément saillant présentant un axe pour la fixation du dispositif à un montant de ladite baie et
- d'autre part au moins une semelle présentant une face intérieure et une face extérieure qui est située contre une surface intérieure dudit élément vitré et
ladite semelle étant intégrée dans une portion de matière élastique adhérant au moins à ladite face intérieure dudit élément vitré.

Dans ce dispositif, l'élément saillant est un moyen de fixation mobile qui est mobile à l'intérieur d'une cavité fixe, de telle sorte que l'orientation de l'axe de l'élément saillant par rapport au montant change lors du mouvement d'ouverture ou de fermeture de l'élément vitré.

Ainsi, dans ce dispositif, l'ensemble de la matière élastique qui intègre la semelle de l'élément saillant, ainsi que l'ensemble de l'élément saillant sont solidaire fixement de l'élément vitré : ils accompagnent très exactement l'élément vitré lors des mouvements d'ouverture ou de fermeture par rapport à la baie.

Ce dispositif ne présente pas une fiabilité suffisante car la coopération entre l'élément saillant mobile et la cavité fixe engendre à l'usage une usure prématurée et il y a un risque important qu'ensuite l'élément saillant ne soit plus suffisamment bien retenu par la cavité, cela pouvant mener jusqu'à la chute du vitrage.

L'art antérieur connaît de la demande de brevet DE 103 60 436 un dispositif de fixation pour la fixation d'un élément vitré dont la portion de matière élastique intègre une semelle unique et cette semelle est fixée élastiquement aux éléments saillants grâce à des pattes élastiques. Ces pattes sont protégées sur seulement une partie d'un côté par la portion de matière élastique. La partie qui travaille mécaniquement, celle qui est la plus sollicité et donc la plus fragile, n'est pas protégée.

L'art antérieur connaît en outre de la demande de brevet DE 39 25 804 un dispositif de fixation pour la fixation d'un élément vitré dont la portion de matière élastique n'intègre pas la semelle mais est juste interposée et écrasée entre la semelle et l'élément vitré.

Dans ce dispositif, la semelle est ainsi fixée rigidement à l'élément saillant, de telle sorte que son orientation par rapport à cet élément saillant soit inchangée lors du mouvement d'ouverture ou de fermeture de l'élément vitré. Comme seule la portion de matière élastique intervient pour le mouvement d'ouverture et de fermeture, ce dispositif de fixation pose problème dans le temps car il est difficile de garantir que la matière conserve les mêmes propriétés d'élasticité 5 ans ou 10 ans, voire plus encore, après sa mise en oeuvre.

De même, dans la demande de brevet EP 289 156 l'élasticité du dispositif de fixation pour la fixation n'est gérée que par la matière élastique.

L'art antérieur connaît en outre la demande de brevet CA 2 120 893.

La présente invention a pour but de remédier aux inconvénients de la technique antérieure en proposant un dispositif de fixation d'un vitrage mobile en rotation permettant de fixer d'une manière fiable le vitrage dans la baie, tout en permettant un grand nombre de mouvements d'ouverture et de fermeture, sans risque de chute du vitrage.

Par ailleurs, la présente invention entend proposer un procédé plus facile à mettre en oeuvre et plus fiable de fixation du dispositif de fixation à l'élément vitré.

La présente invention repose ainsi sur une solution où une (ou plusieurs) semelle du dispositif de fixation est (ou sont) incorporée(s) totalement à une portion de matière élastique par moulage de cette matière élastique sur un élément vitré (technologie dite « d'encapsulation ») de telle sorte que cette matière élastique participe d'une part à l'attachement de l'élément saillant à l'élément vitré et d'autre part à l'élasticité requise pour permettre l'ouverture du vitrage selon un angle faible par rapport à la baie.

Ainsi, pour un vitrage et d'un vitrage à un autre d'une même série, d'une part la fixation de chaque dispositif de fixation par l'encapsulat (la matière élastique appliquée par la technique d'encapsulation) est sûre et certaine, mais en outre, le positionnement de chaque dispositif de fixation par rapport à l'élément vitré et d'un élément vitré à un autre d'une même série est précis, facile et rapide puisqu'il est opéré à l'intérieur du moule d'encapsulation.

En outre la matière élastique protège la semelle, qui participe elle-aussi à l'élasticité requise, des agressions extérieures et en particulier de l'eau et du sel ; la partie qui travaille mécaniquement est intégrée à la portion de matière élastique et le système élastique est ainsi insensible aux conditions chimiques extérieures.

Le lien mécanique entre l'élément vitré et l'élément saillant est amélioré : l'effort qui est nécessaire pour atteindre la rupture de la liaison entre les deux est plus élevé que dans le cas de l'art antérieur.

En outre, la sélection de l'élasticité de la matière élastique permet de gérer la déformation de cette matière lors des mouvements d'ouverture et de fermeture et de gérer l'amplitude de la rotation possible en fonction de l'envergure de l'élément vitré.

De fait, si pour une même forme globale de vitrage (même largeur, même positionnement des dispositif de fixation par rapport à la baie), il existe plusieurs longueurs possibles, par exemple pour plusieurs versions différentes d'un même type de véhicule (par exemple une version courte à 5 places et une version plus longue à 7 places), il est alors possible de gérer le fait que l'élément vitré plus grand doit s'ouvrir d'un angle plus faible que l'élément vitré plus petit, simplement en sélectionnant une matière élastique plus rigide pour l'élément vitré plus grand.

Toutefois, il est aussi possible de garder la même matière pour l'élément vitré plus petit et l'élément vitré plus grand. L'élément vitré plus grand sera alors plus facile à ouvrir que l'élément vitré plus petit.

### La présente invention se rapporte ainsi à une baie selon la revendication

### 1. Les revendications dépendantes exposant des variantes avantageuses.

Ainsi suivant l'invention, le dispositif pour la fixation d'un élément vitré dans une baie afin que ledit élément vitré puisse être mobile en rotation par rapport à cette baie selon un axe de rotation d'un angle d'ouverture α, comporte d'une part au moins un élément saillant présentant un axe pour la fixation du dispositif à un montant de ladite baie et d'autre part au moins une semelle présentant une face intérieure et une face extérieure qui est située en-vis-à-vis d'une surface dudit élément vitré et ladite semelle étant intégrée au moins partiellement, voire complètement, dans une portion de matière élastique adhérant au moins à ladite face intérieure dudit élément vitré.

Ce dispositif est remarquable en ce que ledit élément saillant est un moyen de fixation rigide pour la fixation rigide de l'élément saillant au montant de ladite baie, de telle sorte que l'orientation de l'axe de l'élément saillant par rapport au montant soit inchangée lors du mouvement d'ouverture ou de fermeture dudit élément vitré et que lors du mouvement d'ouverture dudit élément vitré, une partie de ladite portion de matière élastique située entre ladite semelle et ledit montant auquel est fixé ledit élément saillant (4) est écrasée entre ladite semelle et ledit montant.

L'élément saillant et la semelle sont liés/attachés l'un à l'autre.

La semelle n'est pas collée à l'élément vitré car il est souhaité que la matière élastique interposée entre la semelle et l'élément vitré puisse s'écraser lors de l'ouverture de l'élément vitré et se relâcher lors de la fermeture de l'élément vitré.

La surface dudit élément vitré en-vis-à-vis de laquelle la face extérieure de la semelle est positionnée est la face intérieure dudit élément vitré.

La semelle est fixée élastiquement audit élément saillant, de telle sorte que son orientation par rapport audit élément saillant soit changée lors du mouvement d'ouverture ou de fermeture dudit élément vitré.

Le dispositif comporte une partie de liaison coudée liant mécaniquement ledit élément saillant à ladite semelle ; la partie de liaison coudée formant un coude compris, de préférence, entre 30° et 180°.

Selon l'invention, la portion de matière élastique adhère uniquement à ladite face intérieure dudit élément vitré ; ainsi, le chant périphérique du vitrage peut être positionné très près de la carrosserie, sans qu'il soit nécessaire de prévoir d'autre joint ; l'espace visible entre le chant périphérique du vitrage et la carrosserie adjacente peut être ainsi inférieur à 5 mm, ce qui donne une impression de continuité entre le vitrage et la carrosserie.

Dans toutes ces variantes ledit élément saillant peut être un boulon présentant une partie filetée et une tête qui est soudée à ladite semelle ou venue de matière avec ladite semelle ou traversant ladite semelle, ladite tête étant, de préférence, intégrée au moins partiellement, voire complètement, dans ladite portion de matière élastique.

Dans une variante particulière, ladite semelle comporte au moins un trou débouchant sur sa face intérieure et sur sa face extérieure et rempli de la matière de ladite portion de matière élastique.

Dans une variante toute particulière, ladite semelle comporte au moins une patte d'ancrage, et notamment quatre pattes d'ancrage, positionnée(s) dans ladite portion de matière élastique.

De préférence, ladite semelle, en particulier lorsqu'elle est en métal ou alliage métallique, n'est pas du tout en contact avec l'élément vitré, afin de limiter tout risque de rupture de cet élément sous l'effet d'un frottement de la semelle lors des mouvements d'ouverture et de fermeture.

La présente invention concerne également un vitrage comportant un élément vitré et au moins un, et de préférence deux, dispositif(s) selon l'invention, pour la fixation de l'élément vitré dans une baie.

La présente invention concerne en outre à l'utilisation d'un dispositif pour la fixation d'un élément vitré dans une baie selon l'invention telle que définie dans la revendication 7.

La présente invention permet de réaliser une liaison très fiable entre l'élément vitré et le(s) dispositif(s) de fixation de cet élément à la baie.

Le fait de noyer la semelle dans la portion de matière élastique permet d'augmenter la résistance à l'arrachement de la semelle (et donc de l'élément saillant) par rapport à l'élément vitré, tout en protégeant la partie qui travaille mécaniquement des agressions extérieures.

Il n'est plus indispensable d'utiliser un alliage métallique pour le(s) dispositif(s) de fixation et il n'est plus indispensable de prévoir un traitement de cataphorèse.

Il est onéreux de concevoir un moule d'encapsulation pour n'encapsuler que de petites pièces comme les portions de matières plastiques selon l'invention ; toutefois, cet inconvénient est largement compensé par le fait que le vitrage peut être manipulé dès sa sortie du moule d'encapsulation sans risque d'endommager ou de modifier l'aspect ou les propriétés de la liaison du(des) dispositif(s) de fixation à l'élément vitré.

Par ailleurs, l'invention est particulièrement utile lorsque l'élément vitré est galbé, voire très galbé. En effet, dans ce cas, il peut être difficile de positionner correctement à la main des dispositifs de fixation. Dans le cadre de l'invention, grâce à l'utilisation du moule, les dispositifs de fixation sont disposés dans le moule avant l'encapsulation avec une très grande précision vis-à-vis de l'élément vitré et ainsi les dispositifs de fixation se trouvent positionnés avec une très grande précision vis-à-vis de l'élément vitré après l'encapsulation.

On décrira ci-après, à titre d'exemples non limitatifs, plusieurs formes d'exécution de la présente invention, en référence aux dessins annexés sur lequel :
- la figure 1 illustre une vue de la face intérieure d'un vitrage de véhicule comportant deux dispositifs de fixation de l'art antérieur pour la fixation d'un élément vitré ;
- la figure 2 est une vue en coupe selon BB' de la figure 1 faisant en outre apparaître partiellement la baie par rapport à laquelle le vitrage est mobile, le vitrage étant en position fermé ;
- la figure 3 est une vue en coupe selon BB' de la figure 1 faisant en outre apparaître partiellement la baie par rapport à laquelle le vitrage est mobile, le vitrage étant ouvert d'un angle α ;
- la figure 4 illustre une vue de la face intérieure d'un vitrage de véhicule selon l'invention comportant deux exemples de dispositifs de fixation identiques pour la fixation d'un élément vitré selon l'invention ;
- la figure 5 est une vue en coupe selon CC' de la figure 4 d'un dispositif de fixation pour la fixation d'un élément vitré selon une première variante de réalisation de l'invention, faisant en outre apparaître partiellement la baie par rapport à laquelle le vitrage est mobile, le vitrage étant en position fermé ;
- la figure 6 est une vue en coupe selon BB' de la figure 4 faisant en outre apparaître partiellement la baie par rapport à laquelle le vitrage est mobile, le vitrage étant en position fermé ; et
- la figure 7 est une vue en coupe selon BB' de la figure 4 faisant en outre apparaître partiellement la baie par rapport à laquelle le vitrage est mobile, le vitrage étant ouvert d'un angle α.

Dans ces figures, les proportions entre les différents éléments ne sont pas exactement respectées sur chaque figure mais sont respectés d'une figure similaire à l'autre et les éléments en arrière plan ne sont en général pas représentés, afin de faciliter leur lecture.

Les figures 1 à 3 illustrent la réalisation d'un vitrage de véhicule 10' de l'art antérieur, comprenant un élément vitré 2 et deux dispositifs de fixation 1' qui sont tous les deux identiques, pour la fixation de élément vitré 2 dans une baie (non visible en figure 1) afin que cet élément vitré 2 puisse être mobile en rotation par rapport à cette baie selon un axe de rotation R d'un angle d'ouverture α faible, c'est-à-dire entre > 0° et ≤ 10°, comme par exemple 5° ou 7°.

Le vitrage 10', est destiné à fermer une baie réalisant une séparation entre un espace intérieur du véhicule et un espace extérieur au véhicule. L'élément vitré 2 présente ainsi une face intérieure 21, destinée à être tournée vers l'espace intérieur, une face extérieure 23 destinée à être tournée vers l'espace extérieur, ainsi qu'un chant 22 périphérique.

Ainsi, lorsqu'il est fait référence aux notions de « intérieur » et « extérieur » dans le présent document, c'est toujours en référence à cette considération.

L'élément vitré peut être monolithique, c'est-à-dire constitué d'une feuille de matière unique, ou être composite, c'est-à-dire constitué de plusieurs feuilles de matière entre lesquelles est insérée au moins une couche de matière adhérente dans le cas des vitrages feuilletés. La (ou les) feuille(s) de matière peut (ou peuvent) être minérale(s), notamment en verre, ou organique(s), notamment en matière plastique.

Dans le cas d'un vitrage pour véhicule, le vitrage présente généralement au moins partiellement à sa périphérie, tout autour du bord de la face intérieure 21, une bande d'ornementation 24. Cette bande d'ornementation résulte en général d'un dépôt d'émail, réalisé sur la face intérieure de l'élément vitré lorsqu'il est monolithique ou sur une face intercalaire du vitrage pour les vitrages composites, mais elle peut également résulter d'une coloration partielle et/ou périphérique d'une feuille de matière utilisée, notamment d'une feuille en matière organique.

Lorsque l'élément vitré est en matière organique, il a été fabriqué préalablement à la mise en oeuvre de l'invention par moulage de la matière constitutive de l'élément vitré dans un dispositif de moulage comportant un moule comportant au moins une partie fixe de moule et une partie mobile de moule qui est mobile par rapport à la partie fixe de moule, lesdites parties de moule coopérant à l'état fermé du moule, pendant l'étape de moulage, pour former une cavité de moulage présentant en coupe la forme en coupe de l'élément vitré. Souvent, l'élément vitré en matière organique n'est pas plat mais bombé.

Lorsque l'élément vitré est en matière minérale, il a été fabriqué préalablement à la mise en oeuvre de l'invention par fusion de matière minérale en une feuille plate, puis par découpe de cette feuille et éventuellement bombage et/ou trempe de cette feuille.

Pour information, la fabrication d'un élément vitré en matière organique en grande série est plus onéreuse que la fabrication d'un élément vitré en matière minérale et le premier mode de fabrication est en général choisi lorsque la forme de l'élément vitré est tellement complexe qu'elle ne peut pas être réalisée par bombage d'un élément vitré en matière minérale.

Lorsque l'élément vitré est un élément vitré composite, il a été fabriqué selon la technique bien connue de fabrication des vitrages multiples ou des vitrages feuilletés, éventuellement bombés.

Sur la figure 1, l'élément vitré 2 est un vitrage monolithique. C'est ici un vitrage ouvrable latéral arrière d'un véhicule automobile (custode arrière qui peut être entrebâillée).

La figure 2 illustre le dispositif de fixation 1' vue en coupe selon BB' de la figure 1 lorsque l'élément vitré est en position fermé et la figure 3 illustre le dispositif de fixation 1' vue en coupe selon BB' de la figure 1 lorsque l'élément vitré est en position ouverte selon l'angle d'ouverture α. α représente l'angle maximum d'ouverture ; l'élément vitré 2 ne peut tourner au-delà de cet angle par rapport à la baie en raison de la présence d'un système de blocage d'ouverture, non illustré, coopérant avec un trou 25 traversant l'élément vitré 2.

Chaque dispositif 1 ' comporte, comme visible en figure 2 :
- d'une part au moins un élément saillant 4 présentant un axe A pour la fixation du dispositif 1 à un montant 3 de ladite baie et
- d'autre part au moins une semelle 5 présentant une face intérieure 51 et une face extérieure 53 qui est située en-vis-à-vis de la surface intérieure 21 de l'élément vitré 2.

L'élément saillant 4 est ici un boulon présentant une partie filetée 40 et une tête 41, plus large que la partie filetée.

L'élément saillant et la semelle sont liés/attachés l'un à l'autre. Pour cela, le dispositif de fixation 1' comporte une partie de liaison 7 coudée à 180° liant mécaniquement l'élément saillant 4 à la semelle 5, l'extrémité de la partie de liaison 7 étant percée pour retenir la tête 41 de l'élément saillant 4.

La semelle 5 a été collée à l'aide d'une colle polyuréthane sur la face intérieure 21 de l'élément vitré 2, et plus précisément sur la bande d'ornementation 24 déposée préalablement à la périphérie de la face intérieure 21 afin que cette semelle 5 ne soit pas visible de l'extérieur du véhicule.

Pour la fixation rigide de l'élément saillant 4 à la baie, la partie filetée 40 est introduite dans un trou ménagé dans le montant 3, et plus précisément ici dans une feuillure double 3, 3'. Une garniture 8 est ensuite positionnée sur la feuillure double pour la cacher de la vue intérieure, puis un écrou 9 est vissé sur la partie filetée 40.

Comme visible en comparant les figures 2 et 3, l'élément saillant 4 est un moyen de fixation rigide pour la fixation rigide de l'élément saillant au montant 3 de la baie, de telle sorte que l'orientation de l'axe A par rapport au montant 3 soit inchangée lors du mouvement d'ouverture ou de fermeture dudit élément vitré 2.

Par contre, comme visible en comparant les figures 2 et 3, la semelle 5 est un moyen de fixation souple pour la fixation souple de l'élément saillant au montant 3 de ladite baie.

Comme la semelle 5 est collée à la face intérieur 21, lors de l'ouverture du vitrage (passage de la figure 2 à la figure 3), la semelle 5 suit le mouvement de rotation de l'élément vitré 2 par rapport à l'axe R en se déformant dans la partie de liaison 7, de telle sorte que l'orientation de l'élément vitré 2 par rapport à l'axe A soit changée lors du mouvement d'ouverture ou de fermeture dudit élément vitré 2.

Ainsi, si dans la position fermée l'élément vitré 2 (ici sa face extérieure 23 pour simplifier) présente un angle δ, par exemple de 90°, par rapport à l'axe A de l'élément saillant 4 à l'endroit où l'axe A traverse la face extérieure 23, alors, dans la position ouverte de l'élément vitré 2 (figure 3) l'angle δ' entre la face extérieure 23 et l'axe A à l'endroit où l'axe A traverse la face extérieure 23 est : δ - α ; soit par exemple 85° ou 83° selon que l'angle d'ouverture α soit respectivement par exemple de 5° ou de 7°.

Comme visible en figure 3, l'axe de rotation R est situé dans le creux de la partie de liaison 7 coudée.

La semelle 5 est donc fixée élastiquement à l'élément saillant 4, de telle sorte que son orientation par rapport audit élément saillant 4 soit changée lors du mouvement d'ouverture ou de fermeture dudit élément vitré 2.

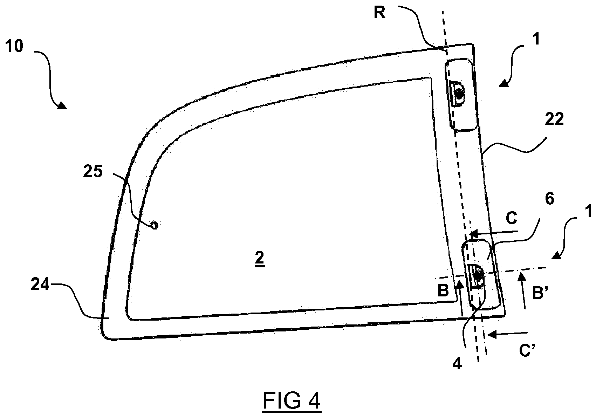

La présente invention est décrite ci-après : elle utilise un vitrage 10, et notamment un vitrage de véhicule tel que celui visible sur la figure 4, pour la fixation d'un élément vitré 2 dans une baie (non visible en figure 4) afin que cet élément vitré 2 puisse être mobile en rotation par rapport à cette baie selon un axe de rotation R d'un angle d'ouverture α faible, c'est-à-dire entre > 0° et ≤ 10°, comme par exemple 5° ou 7°.

Le vitrage 10 utilisé pour l'invention est identique au vitrage 10' illustré en figure 1, sauf en ce qu'il comporte deux dispositifs de fixation 1 qui sont tous les deux identiques, mais qui sont différents des dispositifs de fixation 1' des figures 1 à 3. Les éléments techniques du vitrage 10' de l'art antérieur qui peuvent être repris à l'identique pour le vitrage 1 selon l'invention comportent la même référence dans tout le présent document. En particulier l'élément vitré 2, le montant 3, l'élément saillant 4 et la semelle 5 peuvent être identiques.

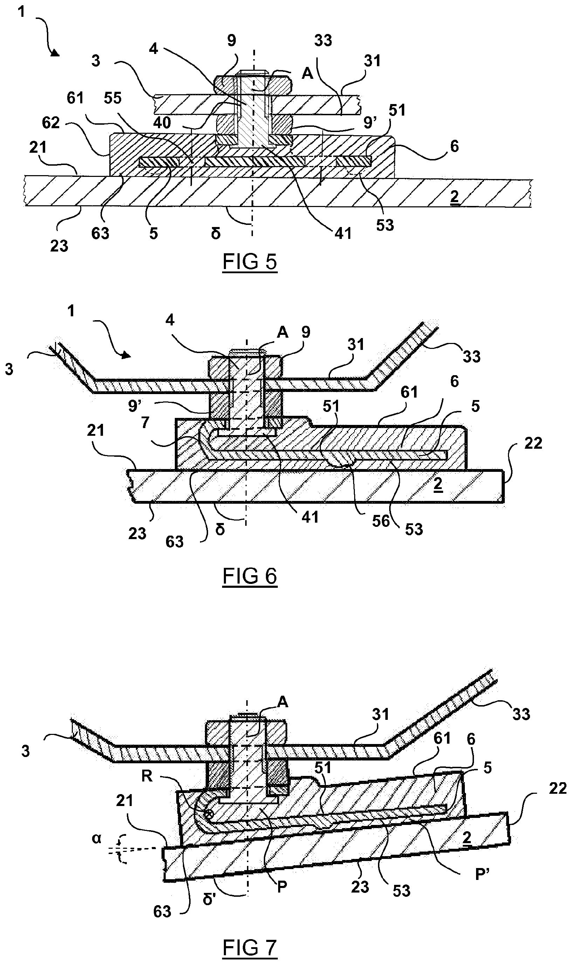

Comme pour les dispositifs de fixation 1', chaque dispositif de fixation 1 utilisé pour l'invention comporte, comme visible en figure 5 :
- d'une part au moins un élément saillant 4 présentant un axe A pour la fixation du dispositif 1 à un montant 3 de ladite baie et
- d'autre part au moins une semelle 5 présentant une face intérieure 51 et une face extérieure 53 qui est située en-vis-à-vis de la surface intérieure 21 de l'élément vitré 2.

Par contre, contrairement aux dispositifs de fixation 1', la semelle 5 de chaque dispositif de fixation 1 n'est pas collée sur la face intérieure 21 : ladite semelle 5 est intégrée complètement, dans une portion de matière élastique 6 qui elle, adhère au moins à ladite face intérieure 21 de l'élément vitré 2.

La portion de matière élastique 6 présente ainsi une face intérieure 61 qui est destinée à être orientée vers l'intérieur du véhicule, ainsi qu'une face latérale 62 et une face extérieure 63 qui est destinée à être orientée vers l'extérieur du véhicule.

Le matériau polymère constitutif de la portion de matière élastique 6 peut être un thermoplastique (PVC, TPE, TPU ...), un thermodurcissable (polyuréthanne RIM) ou encore un caoutchouc synthétique du type EPDM ou toute autre matière adéquate.

Il est possible de prévoir un primage préalable de l'élément vitré 2 avant l'encapsulation.

Selon l'invention, la portion de matière élastique 6, qui est située au moins entre ladite face intérieure 21 de l'élément vitré 2 et la face extérieure 53 de la semelle 5 n'est pas une couche de colle.

La matière élastique de la portion de matière élastique 6 présente, de préférence un module d'Young à 20°C compris entre 5 MPa et 75 MPa en incluant ces valeurs.

La matière élastique de la portion de matière élastique 6 présente, de préférence un module d'Young à 100°C compris entre 3 MPa et 50 MPa en incluant ces valeurs.

C'est le module d'Young à la température d'utilisation (c'est-à-dire pour simplifier le module à 20 °C) qui détermine l'élasticité de l'ouverture et de la fermeture) du dispositif selon l'invention.

Avantageusement, le fait que le module d'Young à 100°C de la matière élastique de la portion de matière élastique 6 soit proche (différent de moins de 20 MPa), voire identique, au module d'Young à 20°C de cette matière permet d'assurer que l'effort nécessaire à l'ouverture de l'élément vitré soit sensiblement identique quelle que soit la température extérieure au véhicule.

La portion de matière élastique 6 est fabriquée par mise en oeuvre d'un procédé de fabrication appelé « encapsulation » car il comporte une étape de moulage de la portion de matière élastique 6 dans un dispositif de moulage, entre deux éléments de moulage, un élément de moulage accueillant la face intérieure du vitrage et un élément de moulage accueillant la face extérieure du vitrage, ces deux éléments de moulage étant refermés l'un sur l'autre pendant l'étape de moulage tout en réalisant entre eux une cavité de moulage qui est remplie de la matière constitutive de la portion de matière élastique 6 pendant l'étape de moulage de cette portion.

La comparaison de la figure 4 avec la figure 1 montre que les portions de matière plastique 6 des dispositifs de fixation 1 utilisé pour l'invention occupent nécessairement un volume plus important sur la face intérieure de l'élément vitré que les semelles des dispositifs de fixation 1' de l'art antérieur, du fait que chaque portion de matière plastique 6 est plus longue et plus large que la semelle 5 qu'elle intègre.

Les deux portions de matière élastique 6 des deux dispositifs 1 de la figure 4 sont de préférence encapsulées en même temps. Comme visible sur cette figure, les deux portions de matière élastique 6 sont séparées l'une de l'autre, mais il est également possible de ne réaliser qu'une seule portion de matière plastique, intégrant les deux semelles 5 des deux dispositifs 1.

L'élément saillant 4 est ici un boulon présentant une partie filetée 40 et une tête 41, plus large que la partie filetée. Pour la fixation rigide de l'élément saillant 4 à la baie, la partie filetée 40 est introduite dans un trou ménagé dans le montant 3, puis un écrou 9 est vissé sur la partie filetée 40.

La tête 41 est soudée à la semelle 5 ou est venue de matière avec ladite semelle 5 ou traverse la semelle 5 (c'est-à-dire dans ce dernier cas, est située de l'autre côté de la semelle par rapport à la partie filetée). La tête 41 est ainsi, de préférence, intégrée au moins partiellement, voire complètement, dans ladite portion de matière élastique 6. La partie filetée 40 est ainsi, de préférence, complètement en dehors de la portion de matière élastique 6, afin de faciliter le moulage.

En alternative, la partie filetée 40 pourrait être un clip.

La matière de la semelle 5 (voire de tout le dispositif de fixation 1) peut être :
- un acier inoxydable, ou
- un acier traité contre la corrosion (mais pas forcément avec une cataphorèse, par exemple par un pré-zincage), ou
- une matière plastique renforcée d'une charge, comme par exemple un polyamide chargé en fibres de verres (ex. : PA66FV).

Selon l'invention, l'élément saillant 4 est un moyen de fixation rigide pour la fixation rigide de l'élément saillant au montant 3 de ladite baie, de telle sorte que l'orientation de l'axe A par rapport au montant 3 soit inchangée lors du mouvement d'ouverture ou de fermeture dudit élément vitré 2 et que lors du mouvement d'ouverture dudit élément vitré 2 une partie P de ladite portion de matière élastique 6 soit écrasée entre ladite semelle 5 et ledit montant 3 ; cette matière élastique est, par ailleurs, relâchée lors du mouvement de fermeture.

Dans le système cinématique selon l'invention, il est possible d'interposer une cale rigide, au contact du montant 3 et/ou au contact de la semelle 5 et/ou au contact de l'élément vitré 2 ; ce qui est important c'est que l'on obtienne l'écrasement de la portion de matière élastique 6 à l'ouverture et son relâchement à la fermeture.

Pour obtenir l'effet d'écrasement/relâchement à l'ouverture/fermeture, la matière élastique 6 est choisie par exemple, en TPE : C85A HPM, disponible auprès de l'entreprise BASF. Il présente un module d'Young à 20°C de 20 MPa et un module d'Young à 100°C de 4 MPa.

La semelle 5 peut comporter au moins un trou 55 débouchant sur sa face intérieure 51 et sur sa face extérieure 53 et rempli de la matière de ladite portion de matière élastique 6 afin d'augmenter la tenue de la liaison mécanique entre la matière élastique 6 et la semelle 5.

La semelle 5 peut en outre comporter au moins une patte d'ancrage 56, et notamment quatre pattes d'ancrage 56, positionnée(s) dans ladite portion de matière élastique 6 afin d'augmenter encore la tenue de la liaison mécanique entre la matière élastique 6 et la semelle 5.

Il est préférable que la semelle 5 ne soit pas en contact avec une face de l'élément vitré pour éviter tout risque de rupture de cet élément, en particulier lorsque la semelle est en métal ou alliage métallique. La(les) patte(s) d'ancrage 56 peu(ven)t être en contact avec une face de l'élément vitré, mais il est alors préférable de la (les) configurer avec une partie en retour vers l'intérieur pour éviter tout risque de rupture de l'élément vitré, en particulier lorsque la(les) patte(s) d'ancrage est(sont) en métal ou alliage métallique.

Comme illustré aux figures 4 à 7, l'élément saillant et la semelle sont liés/attachés l'un à l'autre de la même manière que dans l'art antérieur présenté dans les figures 1 à 3. Pour cela, le dispositif de fixation 1 comporte une partie de liaison 7 coudée à 180° liant mécaniquement l'élément saillant 4 à la semelle 5, l'extrémité de la partie de liaison 7 étant percée pour retenir la tête 41 de l'élément saillant 4.

La semelle 5 est intégré dans la portion de matière élastique 6 sur la face intérieure 21 de l'élément vitré 2, et plus précisément sur la bande d'ornementation 24 déposée préalablement à la périphérie de la face intérieure 21 afin que cette portion de matière élastique 6 ne soit pas visible de l'extérieur du véhicule.

La portion de matière élastique 6 protège, en les recouvrant, la totalité de la semelle 5 avec la partie de liaison 7. Elle augmente la tenue mécanique de l'ensemble de la fixation.

Comme visible en figures 5 et 6, seule la face la plus à l'intérieure de la partie coudée 7 de la semelle 5 est affleurante à la surface de la face intérieure 61 de la portion de matière élastique 6, mais cette face est ensuite positionnée contre une rondelle 9' interposée entre le montant 3 et la tête 41 de l'élément saillant 4 de telle sorte que cette face est elle aussi protégée contre les agressions chimiques extérieures.

Cette rondelle 9' est facultative ; la face la plus à l'intérieure de la partie coudée 7 de la semelle 5 peut ainsi positionnée directement contre le montant 3. Cette rondelle 9' peut être rigide ou flexible ; si elle est flexible, sa flexibilité participe à l'élasticité qui permet l'écrasement de la portion de matière élastique 6 entre le montant 3 et la semelle 5.

Comme visible en comparant les figures 6 et 7, l'élément saillant 4 est un moyen de fixation rigide pour la fixation rigide de l'élément vitré au montant 3 de la baie, de telle sorte que l'orientation de l'axe A par rapport au montant 3 soit inchangée lors du mouvement d'ouverture ou de fermeture dudit élément vitré 2.

Comme visible en comparant les figures 6 et 7, la semelle 5 est un moyen de fixation souple pour la fixation souple de l'élément vitré au montant 3 de ladite baie : la semelle 5 est fixée élastiquement à l'élément saillant 4, de telle sorte que son orientation par rapport audit élément saillant 4 soit changée lors du mouvement d'ouverture ou de fermeture dudit élément vitré 2, mais l'essentiel de l'élasticité du mouvement de l'élément vitré 2 par rapport au montant 3 est obtenu par la matière élastique 6.

En effet, à la différence de l'art antérieur illustré aux figures 1 à 3, la souplesse de la semelle 5 de la première variante intervient peu dans la maîtrise de la rotation du vitrage.

Lors du mouvement d'ouverture de l'élément vitré 2, d'une part une partie P de la portion de matière élastique 6 est écrasée entre la semelle 5 et le montant 3 (et plus précisément entre la semelle 5 et la rondelle 9' lorsqu'elle est choisie rigide) et d'autre part une partie P' de la portion de matière élastique 6 est écrasée entre la semelle 5 et la face intérieure 21 de l'élément vitré 2, même si, dans la pratique, l'écrasement en partie P' est faible et n'est pas facile à observer.

Ainsi, lors de l'ouverture du vitrage (passage de la figure 6 à la figure 7), la semelle 5 suit le mouvement de rotation de l'élément vitré 2 par rapport à l'axe R en se déformant dans la partie de liaison 7, de telle sorte que l'orientation de l'élément vitré 2 par rapport à l'axe A soit changée lors du mouvement d'ouverture ou de fermeture dudit élément vitré 2, mais surtout, la portion de matière élastique 6 se déforme :
Ainsi, si dans la position fermée l'élément vitré 2 (ici sa face extérieure 23 pour simplifier) présente un angle δ, par exemple de 90°, par rapport à l'axe A de l'élément saillant 4 à l'endroit où l'axe A traverse la face extérieure 23, alors, dans la position ouverte de l'élément vitré 2 (figure 7) l'angle δ' entre la face extérieure 23 et l'axe A à l'endroit où l'axe A traverse la face extérieure 23 est : δ - α ; soit par exemple 85° ou 83° selon que l'angle d'ouverture α soit respectivement par exemple de 5° ou de 7°.

Si angle δ en figure 6 n'est pas de 90°, alors l'angle appelé δ en figure 5 sera différent.

Comme visible en figure 7, l'axe de rotation R est situé dans le creux de la partie de liaison 7 coudée.

Des essais de fatigue ont montré que la liaison réalisée par les portions de matière élastique 6 est extrêmement fiable à l'usage ; plus fiable que la solution de l'art antérieur illustrée aux figures 1 à 3.

## Revendications

1. Baie comportant un élément vitré (2) et un dispositif (1) pour la fixation dudit élément vitré (2) dans ladite baie afin que ledit élément vitré (2) puisse être mobile en rotation par rapport à cette baie selon un axe de rotation R d'un angle d'ouverture α, ledit dispositif (1) comportant
d'une part au moins un élément saillant (4) présentant un axe (A) pour la fixation du dispositif (1) à un montant (3) de ladite baie et
d'autre part au moins une semelle (5) présentant une face intérieure (51) et une face extérieure (53) qui est située en-vis-à-vis d'une surface dudit élément vitré (2) et
ladite semelle (5) étant fixée élastiquement audit élément saillant (4), de telle sorte que son orientation par rapport audit élément saillant (4) soit changée lors du mouvement d'ouverture ou de fermeture dudit élément vitré (2),
et la semelle (5) comportant une partie de liaison (7) coudée liant mécaniquement ledit élément saillant (4) à ladite semelle (5),
ledit élément saillant (4) étant un moyen de fixation rigide pour la fixation rigide de l'élément saillant au montant (3) de ladite baie, de telle sorte que l'orientation de l'axe (A) par rapport au montant (3) soit inchangée lors du mouvement d'ouverture ou de fermeture dudit élément vitré (2),
**caractérisée en ce que**
ladite semelle (5) est intégrée complètement dans une portion de matière élastique (6) adhérant uniquement à ladite face intérieure (21) dudit élément vitré (2),
**et en ce que** lors du mouvement d'ouverture dudit élément vitré (2), une partie (P) de ladite portion de matière élastique (6) située entre ladite semelle (5) et ledit montant (3) auquel est fixé ledit élément saillant (4) est écrasée entre ladite semelle (5) et ledit montant (3).

2. Baie selon la revendication 1, **caractérisée en ce que** la matière élastique de la portion de matière élastique 6 présente un module d'Young à 20°C compris entre 5 MPa et 75 MPa en incluant ces valeurs.

3. Baie selon la revendication 1 ou 2, **caractérisée en ce que** la matière élastique de la portion de matière élastique 6 présente un module d'Young à 100°C compris entre 3 MPa et 50 MPa en incluant ces valeurs.

4. Baie selon l'une quelconque des revendications 1 à 3, **caractérisée en ce que** ledit élément saillant (4) est un boulon présentant une partie filetée (40) et une tête (41) qui est soudée à ladite semelle (5) ou venue de matière avec ladite semelle (5) ou traversant ladite semelle (5), ladite tête (41) étant, de préférence, intégrée au moins partiellement, voire complètement, dans ladite portion de matière élastique (6).

5. Baie selon l'une quelconque des revendications 1 à 4, **caractérisée en ce que** ladite semelle (5) comporte au moins un trou (55) débouchant sur sa face intérieure (51) et sur sa face extérieure (53) et rempli de la matière de ladite portion de matière élastique (6).

6. Baie selon l'une quelconque des revendications 1 à 5, **caractérisée en ce que** ladite semelle (5) comporte au moins une patte d'ancrage (56), et notamment quatre pattes d'ancrage (56), positionnée(s) dans ladite portion de matière élastique (6).

7. Utilisation d'un dispositif (1) pour la fixation d'un élément vitré (2) dans une baie selon l'une quelconque des revendications 1 à 6, ledit dispositif (1) comportant
d'une part au moins un élément saillant (4) présentant un axe (A) pour la fixation du dispositif (1) à un montant (3) de ladite baie et
d'autre part au moins une semelle (5) présentant une face intérieure (51) et une face extérieure (53) qui est située en-vis-à-vis d'une surface dudit élément vitré (2) et
ladite semelle (5) étant fixée élastiquement audit élément saillant (4), de telle sorte que son orientation par rapport audit élément saillant (4) soit changée lors du mouvement d'ouverture ou de fermeture dudit élément vitré (2),
et la semelle (5) comportant une partie de liaison (7) coudée liant mécaniquement ledit élément saillant (4) à ladite semelle (5),
ledit élément saillant (4) étant un moyen de fixation rigide pour la fixation rigide de l'élément saillant au montant (3) de ladite baie, de telle sorte que l'orientation de l'axe (A) par rapport au montant (3) soit inchangée lors du mouvement d'ouverture ou de fermeture dudit élément vitré (2),
**caractérisée en ce que,** pour que ledit élément vitré (2) puisse être mobile en rotation par rapport à cette baie selon un axe de rotation R d'un angle d'ouverture α,
ladite semelle (5) est intégrée complètement dans une portion de matière élastique (6) adhérant uniquement à ladite face intérieure (21) dudit élément vitré (2),
**et en ce que** lors du mouvement d'ouverture dudit élément vitré (2), une partie (P) de ladite portion de matière élastique (6) située entre ladite semelle (5) et ledit montant (3) auquel est fixé ledit élément saillant (4) est écrasée(s) entre ladite semelle (5) et ledit montant (3).

## Patentansprüche

1. Öffnung, welche ein Glaselement (2) und eine Vorrichtung (1) zur Befestigung des Glaselements (2) in der Öffnung aufweist, so dass das Glaselement (2) bezüglich dieser Öffnung drehbeweglich entlang einer Drehachse R um einen Öffnungswinkel α sein kann, wobei die Vorrichtung (1) aufweist:
einerseits wenigstens ein vorstehendes Element (4), das eine Achse (A) aufweist, zur Befestigung der Vorrichtung (1) an einer Säule (3) der Öffnung, und
andererseits wenigstens eine Sohlplatte (5), die eine Innenseite (51) und eine Außenseite (53), welche sich gegenüber einer Fläche des Glaselements (2) befindet, aufweist, und
wobei die Sohlplatte (5) elastisch an dem vorstehenden Element (4) befestigt ist, derart, dass ihre Ausrichtung bezüglich des vorstehenden Elements (4) bei der Öffnungs- oder Schließbewegung des Glaselements (2) geändert wird,
und wobei die Sohlplatte (5) einen abgewinkelten Verbindungsteil (7) aufweist, der das vorstehende Element (4) mit der Sohlplatte (5) mechanisch verbindet,
wobei das vorstehende Element (4) ein starres Befestigungsmittel zur starren Befestigung des vorstehenden Elements an der Säule (3) der Öffnung ist, derart, dass die Ausrichtung der Achse (A) bezüglich der Säule (3) bei der Öffnungs- oder Schließbewegung des Glaselements (2) unverändert bleibt,
**dadurch gekennzeichnet, dass**
die Sohlplatte (5) vollständig in einen elastischen Materialabschnitt (6) integriert ist, der ausschließlich an der Innenseite (21) des Glaselements (2) haftet,
und dadurch, dass bei der Öffnungsbewegung des Glaselements (2) ein Teil (P) des elastischen Materialabschnitts (6), der sich zwischen der Sohlplatte (5) und der Säule (3), an welcher das vorstehende Element (4) befestigt ist, befindet, zwischen der Sohlplatte (5) und der Säule (3) zusammengedrückt wird.

2. Öffnung nach Anspruch 1, **dadurch gekennzeichnet, dass** das elastische Material des elastischen Materialabschnitts (6) einen Elastizitätsmodul bei 20 °C aufweist, der zwischen 5 MPa und 75 MPa einschließlich dieser Werte liegt.

3. Öffnung nach Anspruch 1 oder 2, **dadurch gekennzeichnet, dass** das elastische Material des elastischen Materialabschnitts (6) einen Elastizitätsmodul bei 100 °C aufweist, der zwischen 3 MPa und 50 MPa einschließlich dieser Werte liegt.

4. Öffnung nach einem der Ansprüche 1 bis 3, **dadurch gekennzeichnet, dass** das vorstehende Element (4) ein Bolzen ist, der einen mit einem Gewinde versehenen Teil (40) und einen Kopf (41), welcher an die Sohlplatte (5) angeschweißt oder stoffschlüssig mit der Sohlplatte (5) verbunden ist oder die Sohlplatte (5) durchquert, aufweist, wobei der Kopf (41) vorzugsweise wenigstens teilweise oder sogar vollständig in den elastischen Materialabschnitt (6) integriert ist.

5. Öffnung nach einem der Ansprüche 1 bis 4, **dadurch gekennzeichnet, dass** die Sohlplatte (5) wenigstens ein Loch (55) aufweist, das auf ihrer Innenseite (51) und auf ihrer Außenseite (53) mündet und mit dem Material des elastischen Materialabschnitts (6) gefüllt ist.

6. Öffnung nach einem der Ansprüche 1 bis 5, **dadurch gekennzeichnet, dass** die Sohlplatte (5) wenigstens eine Verankerungslasche (56) und insbesondere vier Verankerungslaschen (56) aufweist, die in dem elastischen Materialabschnitt (6) positioniert sind.

7. Verwendung einer Vorrichtung (1) zur Befestigung eines Glaselements (2) in einer Öffnung nach einem der Ansprüche 1 bis 6, wobei die Vorrichtung (1) aufweist:
einerseits wenigstens ein vorstehendes Element (4), das eine Achse (A) aufweist, zur Befestigung der Vorrichtung (1) an einer Säule (3) der Öffnung, und
andererseits wenigstens eine Sohlplatte (5), die eine Innenseite (51) und eine Außenseite (53), welche sich gegenüber einer Fläche des Glaselements (2) befindet, aufweist, und
wobei die Sohlplatte (5) elastisch an dem vorstehenden Element (4) befestigt ist, derart, dass ihre Ausrichtung bezüglich des vorstehenden Elements (4) bei der Öffnungs- oder Schließbewegung des Glaselements (2) geändert wird,
und wobei die Sohlplatte (5) einen abgewinkelten Verbindungsteil (7) aufweist, der das vorstehende Element (4) mit der Sohlplatte (5) mechanisch verbindet,
wobei das vorstehende Element (4) ein starres Befestigungsmittel zur starren Befestigung des vorstehenden Elements an der Säule (3) der Öffnung ist, derart, dass die Ausrichtung der Achse (A) bezüglich der Säule (3) bei der Öffnungs- oder Schließbewegung des Glaselements (2) unverändert bleibt,
**dadurch gekennzeichnet, dass**, damit das Glaselement (2) bezüglich dieser Öffnung drehbeweglich entlang einer Drehachse R um einen Öffnungswinkel α sein kann,
die Sohlplatte (5) vollständig in einen elastischen Materialabschnitt (6) integriert ist, der ausschließlich an der Innenseite (21) des Glaselements (2) haftet,
und dadurch, dass bei der Öffnungsbewegung des Glaselements (2) ein Teil (P) des elastischen Materialabschnitts (6), der sich zwischen der Sohlplatte (5) und der Säule (3), an welcher das vorstehende Element (4) befestigt ist, befindet, zwischen der Sohlplatte (5) und der Säule (3) zusammengedrückt wird.

## Claims

1. Opening comprising a glazed element (2) and a device (1) for fixing said glazed element (2) into said opening in order for said glazed element (2) to be able to be pivoted with respect to this opening about an axis of rotation R through an angle of opening α, said device (1) comprising
on the one hand, at least one projecting element (4) having an axis (A) for fixing the device (1) to an upright (3) of said opening, and
on the other hand, at least one baseplate (5) having an interior face (51) and an exterior face (53) which is situated facing a surface of said glazed element (2) and said baseplate (5) being fixed elastically to said projecting element (4) so that its orientation with respect to said projecting element (4) is changed during the opening or closing movement of said glazed element (2),
and the baseplate (5) comprising a bent connecting part (7) mechanically connecting said projecting element (4) to said baseplate (5), said projecting element (4) being a rigid fixing means for rigidly fixing the projecting element to the upright (3) of said opening so that the orientation of the axis (A) with respect to the upright (3) remains unchanged during the opening or closing movement of said glazed element (2),
**characterized in that** said baseplate (5) is fully integrated into a portion of elastic material (6) adhering solely to said interior face (21) of said glazed element (2),
**and in that** during the opening movement of said glazed element (2), one part (P) of said portion of elastic material (6) situated between said baseplate (5) and said upright (3) to which said projecting element (4) is fixed, is squashed between said baseplate (5) and said upright (3).

2. Opening according to claim 1, **characterized in that** the elastic material of the portion of elastic material (6) has a Young's modulus at 20°C of between 5 MPa and 75 MPa, end-points inclusive.

3. Opening according to Claim 1 or 2, **characterized in that** the elastic material of the portion of elastic material (6) has a Young's modulus at 100°C of between 3 MPa and 50 MPa, end-points inclusive.

4. Opening according to any one of Claims 1 to 3, **characterized in that** said projecting element (4) is a bolt having a threaded part (40) and a head (41) which is welded to said baseplate (5) or formed as an integral part of said baseplate (5) or that passes through said baseplate (5), said head (41) preferably being at least partially, or even fully, integrated into said portion of elastic material (6).

5. Opening according to any one of Claims 1 to 4, **characterized in that** said baseplate (5) comprises at least one hole (55) opening onto its interior face (51) and onto its exterior face (53) and filled with the material of said portion of elastic material (6).

6. Opening according to any one of Claims 1 to 5, **characterized in that** said baseplate (5) comprises at least one anchor tab (56), and notably four anchor tabs (56), positioned in said portion of elastic material (6).

7. Use of a device (1) for fixing a glazed element (2) into an opening according to any one of Claims 1 to 6, said device (1) comprising
on the one hand, at least one projecting element (4) having an axis (A) for fixing the device (1) to an upright (3) of said opening, and
on the other hand, at least one baseplate (5) having an interior face (51) and an exterior face (53) which is situated facing a surface of said glazed element (2) and
said baseplate (5) being fixed elastically to said projecting element (4) so that its orientation with respect to said projecting element (4) is changed during the opening or closing movement of said glazed element (2).
and the baseplate (5) comprising a bent connecting part (7) mechanically connecting said projecting part (4) to said baseplate (5),
said projecting element (4) being a rigid fixing means for rigidly fixing the projecting element to the upright (3) of said opening so that the orientation of the axis (A) with respect to the upright (3) remains unchanged during the opening or closing movement of said glazed element (2),
**characterized in that,** in order for said glazed element (2) to be pivotable with respect to this opening about an axis of rotation R through an angle of opening α,
said baseplate (5) is, fully integrated into a portion of elastic material (6) adhering solely to said interior face (21) of said glazed element (2),
**and so that** during the opening movement of said glazed element (2),one part (P) of said portion of elastic material (6) situated between said baseplate (5) and said upright (3) to which said projecting element (4) is fixed, is squashed between said baseplate (5) and said upright (3).
